**Europäisches Patentamt**

**European Patent Office**

**Office européen des brevets**

(11) Veröffentlichungsnummer: **0 288 588**
**B1**

(12) **EUROPÄISCHE PATENTSCHRIFT**

(45) Veröffentlichungstag der Patentschrift:
11.07.90

(51) Int. Cl.⁵: **G01F 1/28**

(21) Anmeldenummer: **87106054.7**

(22) Anmeldetag: **25.04.87**

(54) Strömungsmessgerät.

(43) Veröffentlichungstag der Anmeldung:
**02.11.88 Patentblatt 88/44**

(45) Bekanntmachung des Hinweises auf die Patenterteilung:
**11.07.90 Patentblatt 90/28**

(84) Benannte Vertragsstaaten:
**AT CH DE FR GB IT LI SE**

(56) Entgegenhaltungen:
**DE-A- 2 926 811**
**DE-A- 3 224 336**
**DE-A- 3 403 887**
**GB-A- 1 116 634**
**US-A- 2 742 784**
**US-A- 3 776 036**

**Die Akte enthält technische Angaben, die nach dem Eingang der Anmeldung eingereicht wurden und die nicht in dieser Patentschrift enthalten sind.**

(73) Patentinhaber: **D+P Dosier- und Prüftechnik GmbH, Ostalbstrasse 20, D-7085 Bopfingen-Trochtelfingen(DE)**

(72) Erfinder: **Faass, Herbert, Jahngasse 11, D-7081 Riesbürg-Utzmemmingen(DE)**

(74) Vertreter: **Lorenz, Werner, Dipl.-Ing., Fasanenstrasse 7, D-7920 Heidenheim(DE)**

## Beschreibung

Die Erfindung betrifft ein Strömungsmeßgerät, insbesondere für eine Auftrags- und Dosiereinrichtung für Klebstoff, Flüssigkeitsdichtung, Öl- oder Fettauftrag, das ein in oder an einen zu überwachenden Kanal ein- bzw. ansetzbares Gehäuse aufweist, an oder in dessen vorderem in den Kanal ragenden Bereich ein beweglicher, auf den Druck der Strömung reagierender federnd gelagerter Meßstab angeordnet ist, der mit seinem vorderen Ende in den Kanal ragt, während sein anderer Endbereich im Meßbereich einer optischen Abtasteinrichtung liegt, die mit einer einen Meßverstärker aufweisenden Auswerte- und Kontrolleinrichtung verbunden ist.

In zunehmendem Maße werden in der modernen Montage- und Verbindungstechnik die herkömmlichen Verbindungsarten, wie Schrauben, Nieten, Schweißen und Löten durch eine Klebetechnik ersetzt, die häufig wirtschaftlicher ist. Ebenso werden öfters Feststoffdichtungen, die in der Handhabung schwierig und vergleichsweise teuer sind, durch flüssige oder pastenartige Dichtstoffe ersetzt. Ein weiteres Gebiet ist das Auftragen von Ölen oder Fett in einer genau zu dosierenden Menge auf einzuölende oder einzufettende Teile.

Das aufzutragende Medium wird dabei über eine Dosierdüse mit einem Austrittskanal auf das zu behandelnde Teil aufgebracht. Dabei ist es jedoch erforderlich zu prüfen, ob das Medium in der vorgegebenen Menge und Zeit auf das zu behandelnde Teil bzw. dessen Oberfläche aufgebracht wird. Hierzu ist es bekannt, in den Kanal einen Meßfühler einzusetzen, der den Druck des strömenden Mediums mißt. Hierzu verwendet man Dehnungsmeßstreifen, die in üblicher Weise in einer Brückenschaltung abgeglichen sind. Auftretende Querschnittsveränderung in dem Kanal oder an dem Meßfühler aufgrund des Strömungsdruckes werden dabei zur Auswertung und Kontrolle verwendet.

Nachteilig dabei ist jedoch, daß diese Einrichtung relativ aufwendig ist. Weiterhin ist von Nachteil, daß die Messung relativ ungenau ist. So lassen sich z.B. nur sehr große Lufteinschlüsse bzw. stärkere Durchflußstörungen damit erfassen.

Aus der DE-A 3 224 336 ist bereits ein Strömungsgerät bekannt, wobei das Meßglied eine Stauklappe ist, die in einer bestimmten Position gehalten werden soll. Bei höherem Massendurchsatz sind entsprechend größere Kräfte notwendig, um die Stauklappe in ihrer Stellung zu halten. Hierzu dient eine Lichtschranke, die die Stellung der Stauklappe überwacht. Ist die Lichtschranke nicht unterbrochen, wird ein Elektromagnet entsprechend aktiviert, dessen magnetische Kraft die Stauklappe wieder in die Stellung zur Unterbrechung der Lichtschranke zurückbewegt. Diese optische Abtastung ist damit praktisch nur ein Schaltglied. Der tatsächliche Durchflußwert kann damit nicht ermittelt werden. Außerdem ist dieses vorbekannte Strömungsmeßgerät bezüglich einer Baugrößenreduzierung beschränkt, insbesondere wegen des Stauklappenprinzipes.

In der GB-A 1 116 634 ist ein Strömungsmeßgerät beschrieben, das einen federnden Meßstab aufweist, wobei dessen Auslenkung aufgrund der durch das zu messende Medium ausgeübten Druckkraft auf den Meßstab von einer optischen Abtasteinrichtung erfaßt wird. Aufgrund seiner Konstruktion ist dieses Strömungsmeßgerät weder für kleine Kanäle geeignet, noch besitzt es eine hohe Empfindlichkeit. Außerdem ist es nicht bei hohen Drücken einsetzbar.

Der vorliegenden Erfindung liegt daher die Aufgabe zugrunde, ein Strömungsgerät zur Überwachung einer Strömung in einem Kanal zu schaffen, das bei relativ einfachem und sehr kleinem Aufbau eine hohe Empfindlichkeit besitzt und gleichzeitig auch noch im Bedarfsfalle hohe Drücke aufnehmen kann.

Erfindungsgemäß wird diese Aufgabe dadurch gelöst, daß der Meßstab in seinem mittleren Bereich federnd ein einer Lagerstelle in dem Gehäuse gelagert ist, wobei der Meßstab eine Verdickung aufweist, die an der von dem vorderen Ende des Meßstabes abgewandten Seite eine Auflageschulter aufweist, mit der sie an einer damit zusammenarbeitenden Gegenfläche in der Lagerstelle anliegt.

Dadurch, daß der Meßstab in seinem mittleren Bereich in einer Lagerstelle in dem Gehäuse gelagert ist, wobei der Meßstab eine Verdickung mit einer Auflageschulter aufweist, kann das Strömungsmeßgerät auch für hohe und sehr hohe Drücke problemlos verwendet werden.

Auf den in den Strömungskanal der zu messenden Strömung ragenden Meßstab wirkt zwangsläufig eine in axialer Richtung wirkende Kraft, was bei hohen Drücken sowohl zu Abdichtungsproblemen, als auch zu Positionierproblemen führen kann. Durch die erfindungsgemäße Lagerung können Axialkräfte aufgefangen werden, und zwar ohne daß die Meßgenauigkeit darunter leidet. Über die Auflageschulter können nämlich die auftretenden Axialkräfte auf das Gehäuse übertragen werden, und zwar ohne daß es zu einer Beeinträchtigung der Dichtung oder zu einer Verschiebung des Meßstabes kommt.

Eine mögliche Ausgestaltung für die Verdickung kann darin bestehen, daß sie wenigstens annähernd eine teilkegel- oder stumpfkegelförmige Gestalt aufweist, mit der sie an der damit zusammenarbeitenden Gegenfläche in der Lagerstelle anliegt.

Die Verbiegung oder Auslenkung des Meßstabes wird im entsprechenden Verhältnis zur Strömungsgeschwindigkeit direkt angezeigt und damit abgetastet. Mit dieser Abtastung und des möglichen einfachen Aufbaues des Meßstabes kann das Strömungsmeßgerät mit billigen Bauteilen hergestellt werden. Darüber hinaus ist es sehr empfindlich, wodurch auch kleine Strömungsänderungen, wie z.B. kleine Lufteinschlüsse im Medium erkannt werden können. Der Meßstab kann sehr robust und einfach aufgebaut und weiterhin auch sehr klein gehalten werden, wodurch er auch für sehr kleine Anlagen mit engen Kanälen verwendet werden kann.

Der Meßverstärker kann über einen Analogausgang und einen Relaiskontakt (Optokoppler) verfügen.

Grundsätzlich ist das erfindungsgemäße Strömungsmeßgerät für jede Art von Gas- oder Flüssigkeitsmessung geeignet, weshalb die o.a. Einsatzgebiete lediglich beispielshalber genannt sind.

Nachfolgend ist ein Ausführungsbeispiel der Erfindung anhand der Zeichnungen prinzipmäßig beschrieben.

Es zeigt:

Fig. 1: einen Längsschnitt durch den unteren Bereich einer Dosierdüse

Fig. 2: einen Längsschnitt durch ein Strömungsmeßgerät mit einer optischen Abtasteinrichtung

Fig. 3: Ansicht einer Schutzkappe für das Strömungsmeßgerät nach Figur 2

Fig. 4: einen Schnitt nach der Linie IV–IV der Fig. 2

Fig. 5: Prinzipdarstellung der Auswerte- und Kontrolleinrichtung

Fig. 6–8: verschiedene Lagerarten für den Meßstab

Eine Dosierdüse 1 weist im unteren Bereich einen Austrittskanal 2 auf. Die Dosierdüse 1 ist mit einer Gewindebohrung 3 versehen, die in den Austrittskanal 2 ragt. In die Bohrung wird das Gehäuse 4 eines Strömungsmeßgerätes mit einem Gewindeansatz 5 eingeschraubt.

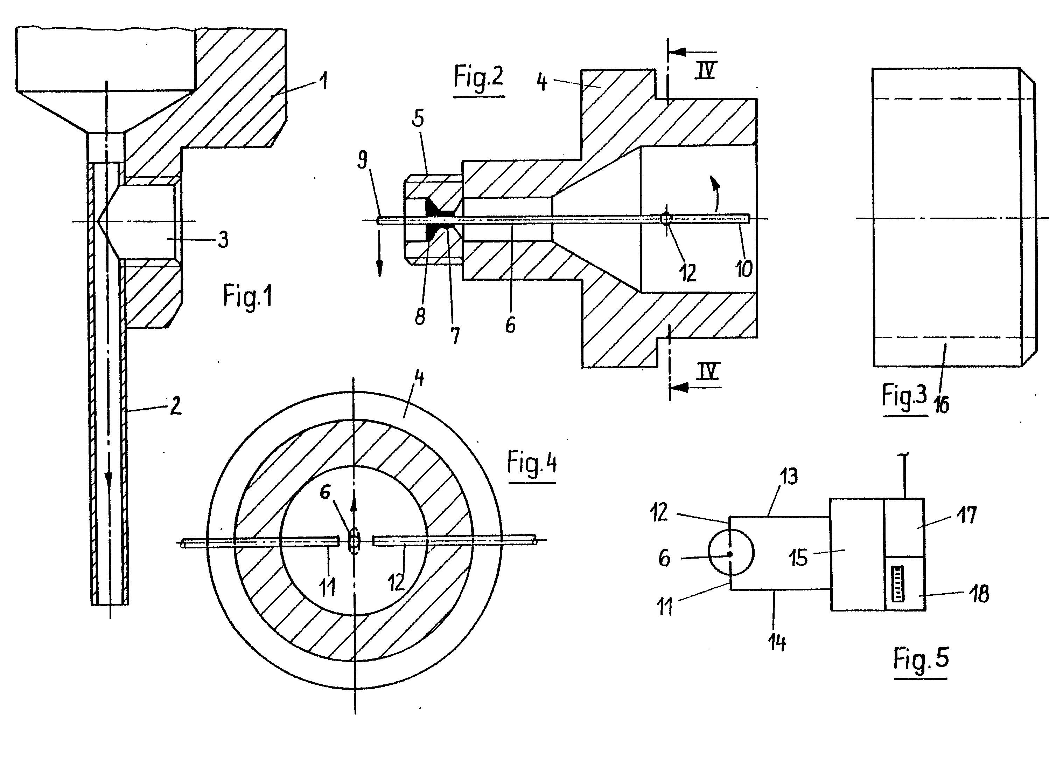

In den Fig. 2 und 4 ist der Aufbau des Strömungsmeßgerätes mit einer optischen Abtastung prinzipmäßig dargestellt. Kern des Strömungsmeßgerätes bildet ein Meßstab 6 als Meßglied, der als einfacher federnder Stahldraht ausgebildet ist. Der Meßstab 6 ist zwischen seinen beiden Enden federnd bzw. nachgiebig in einer Lagerstelle 7 gelagert. Die Lagerstelle 7 wird durch eine Engstelle in einer Durchgangsbohrung in dem Gehäuse 4 gebildet. In dieser Lagerstelle 7 ist der Meßstab elastisch, z.B. durch eine Silikonfüllung 8 gelagert. Zur Einsetzung der Hebelwirkung und zur Erhöhung der Meßgenauigkeit wird man die Lagerstelle 7 wesentlich näher an dem vorderen Ende 9 des Meßstabes anordnen, welches quer in den Kanal 2 ragt. Im Bereich des hinteren Endes 10 des Meßstabes 6 befinden sich gegenüberliegend zwei Glasfaserkabel 11 und 12, die in Bohrungen des Gehäuses 4 gelagert sind. Die Glasfaserkabel 11 und 12 sind über Meßleitungen 13 und 14 mit einer Auswerte- und Kontrolleinrichtung 15 verbunden (Fig. 5).

Eine Schutzkappe 16 ist auf das hintere Ende des Strömungsmeßgerätes aufsetzbar und schützt den Meßstab und die Meßstelle mit den Glasfaserkabeln 11 und 12.

Die erfindungsgemäße Vorrichtung funktioniert auf folgende Weise:

Das Strömungsmeßgerät wird in die Bohrung 3 der Dosierdüse 1 eingeschraubt, wobei lediglich darauf zu achten ist, daß der Meßstab 6 und die Glasfaserkabel 11 und 12 sich in einer Lage befinden, in der der Meßstab 6 aufgrund des Fließdruckes des strömenden Mediums in Fließrichtung (in der Zeichnung nach unten) ausgelenkt werden kann. Hierzu müssen die beiden Glasfaserstäbe 11 und 12 ebenfalls quer zur Strömungsrichtung angeordnet sein;

d.h. bei einem vertikal verlaufenden Kanal müssen sie horizontal liegen.

Durch den Fließdruck des strömenden Mediums wird der Meßstab 6 an seinem vorderen Ende 9 nach unten in Pfeilrichtung ausgelenkt, wobei aufgrund des Hebelgesetzes und der elastischen einseitigen Lagerung in der Lagerstelle 7 gleichzeitig das hintere Ende 10 nach oben verschwenkt wird. Diese Verschwenkung wird über die beiden sich gegenüberliegenden Glasfaserkabel 11 und 12 festgestellt und in der Auswerte- und Kontrolleinrichtung 15 ausgewertet. Hierzu kann diese Einheit auch mit einer Anzeigeeinrichtung 18 versehen sein. Im Bedarfsfalle kann die Auswerteeinheit 15 mit einer Recheneinheit 17 verbunden sein, in der eine Auswertung der Durchflußmenge für einen Regelkreis vorgenommen wird. Hierzu ist es lediglich erforderlich, daß man die spezifischen Daten des zu prüfenden Mediums vorher feststellt und in die Recheneinheit 17 eingibt. Die Auswerte- und Kontrolleinrichtung 15 ist mit einem Meßverstärker versehen, der über einen Analogausgang und einen oder mehrere Relaiskontakte (Optokoppler) verfügt. Dabei kann der Relaiskontakt auch zur Funktionskontrolle, wie z.B. Materialfluß, Lufteinschluß, Funktion des Dosierventiles usw., verwendet werden. Gegebenenfalls kann ein weiterer Relaiskontakt über ein Zusatzgerät zugeschaltet werden. Auf diese Weise können ein unterer und ein oberer Grenzwert bezüglich der Durchflußmenge erfaßt und ausgewertet werden.

Nach einer entsprechenden Eichung kann der Analogausgang zur Durchflußmessung verwendet werden. Diese Messung kann dann z.B. zum Aufbau eines Regelkreises verwendet werden, über den der Durchfluß des strömenden Mediums geregelt wird.

Zur Erhöhung der Meßgenauigkeit kann der Meßstab 6 in seinem Endbereich 10 zwischen den beiden Glasfaserkabeln 11 und 12 abgeflacht sein, wie in der Fig. 4 gestrichelt dargestellt.

Aufgrund der Einfachheit des Aufbaues und des geringen notwendigen Raumbedarfes ist das Strömungsmeßgerät praktisch überall einsetzbar. So können z.B. für den Stahldraht als Meßstab 6 Durchmesser von z.B. nur 0,25 mm und darunter verwendet werden. Aus diesem geringen Maß resultieren auch die übrigen kleinen Maße des Strömungsmeßgerätes.

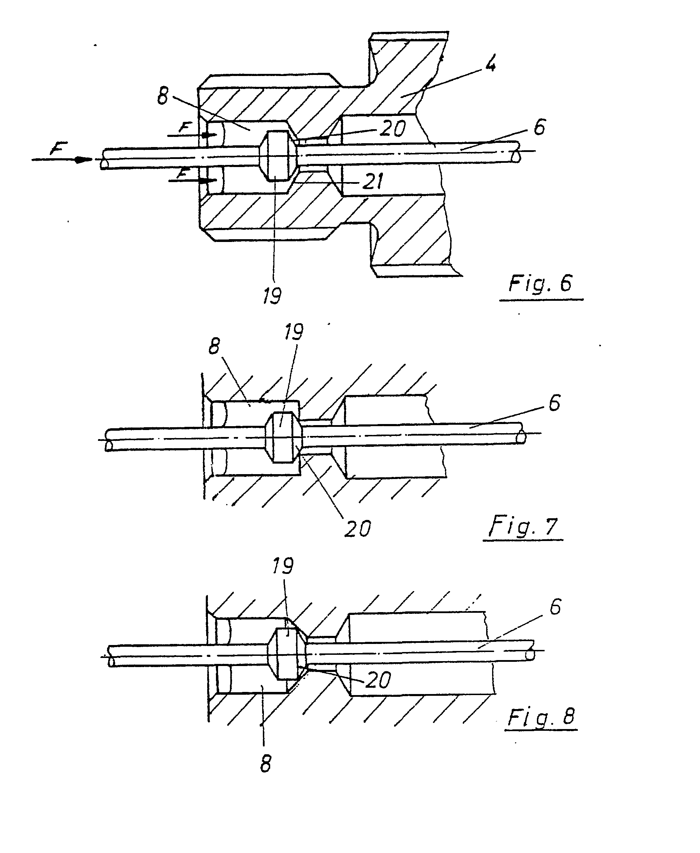

In die Figuren 6–8 sind verschiedene Lagermöglichkeiten für den Meßstab 6 dargestellt, welche für hohe und höchste Drücke geeignet sind. Wie ersichtlich, weist der Meßstab eine Verdickung 19 auf. Die Verdickung 19 weist ein zylindrisches Mittelteil und zwei seitlich daran anschließende stumpfkegelförmige Abschnitte 20 auf. Der hintere stumpfkegelförmige Abschnitt 20 bildet eine Auflageschulter, mit der der Meßstab 6 in einer entsprechend ausgebildeten Gegenfläche 21 in der Lagerstelle 7 aufliegt.

Gemäß Figur 6 ist die Gegenfläche ebenfalls stumpfkegelförmig ausgebildet, wodurch höchste Drücke aufgefangen werden können.

Gemäß Figur 7 ist die Gegenfläche 21 jedoch flach bzw. eben, wodurch die Verdickung 19 mit der Auflageschulter nur eine Linienberührung an der Lagerstelle 7 aufweist. Auf diese Weise stellt die Lagerstelle nur einen geringen Widerstand gegen die auftretenden Kippmomente dar, wodurch die Meßgenauigkeit nicht oder nur unwesentlich beeinträchtigt wird.

Eine ähnliche Ausgestaltung zeigt die Figur 8, wobei die Kegelwinkel der Auflageschulter und der Gegenfläche unterschiedlich sind, wodurch ebenfalls nur eine Linienberührung auftritt.

Statt einer Kegelstumpfform kann selbstverständlich auch für die Verdickung eine Teilkugelform gewählt werden.

In der Praxis wurde festgestellt, daß das erfindungsgemäße Strömungsmeßgerät durch seine geschlossene Bauweise Betriebsdrücke bis 300 Bar bei absoluter Dichtigkeit aufnehmen kann. Durch seine Empfindlichkeit können selbst kleinste Luftblasen im Medium erkannt und angezeigt werden, wobei ein hoher Viskositätsbereich erfaßt werden kann.

## Patentansprüche

1. Strömungsmeßgerät, insbesondere für eine Auftrags- und Dosiereinrichtung für Klebstoff, Flüssigkeitsdichtung, Öl- oder Fettauftrag, das ein in oder an einen zu überwachenden Kanal (2) ein- bzw. ansetzbares Gehäuse (4) aufweist, an oder in dessen vorderem in den Kanal ragenden Bereich ein beweglicher, auf den Druck der Strömung reagierender federnd gelagerter Meßstab (6) angeordnet ist, der mit einem vorderen Ende (9) in den Kanal ragt, während sein anderer Endbereich (10) im Meßbereich einer optischen Abtasteinrichtung liegt, die mit einer einen Meßverstärker aufweisenden Auswerte- und Kontrolleinrichtung (15) verbunden ist, dadurch gekennzeichnet, daß der Meßstab (6) in seinem mittleren Bereich federnd in einer Lagerstelle (7) in dem Gehäuse (4) gelagert ist, wobei der Meßstab (6) eine Verdickung (19) aufweist, die an der von dem vorderen Ende (9) des Meßstabes (6) abgewandten Seite eine Auflageschulter (20) aufweist, mit der sie an einer damit zusammenarbeitenden Gegenfläche (21) in der Lagerstelle (7) anliegt.

2. Strömungsmeßgerät nach Anspruch 1, dadurch gekennzeichnet, daß die Verdickung (19) wenigstens annähernd eine teilkegel- oder stumpfkegelförmige Gestalt aufweist, mit der sie an der damit zusammenarbeitenden Gegenfläche (21) in der Lagerstelle (7) anliegt.

## Claims

1. Flow meter, specifically for an apparatus for applying and metering adhesive, liquid sealant, or a coating of oil or grease, having a casing (4) which can be inserted into or attached to the channel (2) to be monitored, a movable, elastically supported measuring rod (6) reacting to the pressure of the flow being disposed at or in the front region of said casing, projecting into the channel, the front end (9) of said measuring rod projecting into the channel, while its opposite end region (10) lies in the measuring range of an optical sensing device connected to an evaluation and control instrument (15), characterised in that the measuring rod (6), in its central region, is elastically supported in a bearing (7) within the casing (4), wherein the measuring rod (6) has a thickened portion (19) having a bearing shoulder (20) at the side remote from the front end (9) of the measuring rod (6), by means of which it rests against a cooperating surface (21) in the bearing (7).

2. Flow meter according to claim 1, characterised in that the thickened portion (19) is at least approximately in the shape of a pitch cone or a truncated cone, by means of which it rests against the cooperating surface (21) in the bearing (7).

## Revendications

1. Capteur d'écoulement, notamment pour un dispositif pour appliquer et doser de la colle, une masse d'étanchéité aux liquides, de l'huile ou de la graisse, comportant un corps (4) agencé pour être monté sur ou dans un conduit (2) à surveiller, et une barre de mesure (6) mobile, montée sur ou dans une partie avant du corps s'étendant dans le conduit, ladite barre étant montée de manière élastique pour réagir à la pression d'écoulement et ayant une extrémité avant (9) proéminente dans le conduit, tandis que son autre extrémité (10) se trouve dans le champ de mesure d'une sonde optique reliée à un dispositif d'évacuation et de contrôle (15), caractérisé en ce que la barre de mesure (6), dans sa partie centrale, est montée élastiquement dans une zone d'appui (7) prévue dans le corps (4), cette barre de mesure (6) comportant un renflement (19) qui présente, du côté opposé à l'extrémité avant (9) de la barre (6), un épaulement (20) par lequel elle s'appuie contre une surface opposée (21) coopérant avec elle dans ladite zone d'appui (7).

2. Capteur d'écoulement selon la revendication 1, caractérisé en ce que ledit renflement (19) présente au moins approximativement une forme de partie de cône ou de tronçon de cône, par laquelle il s'appuie contre ladite surface opposée (21) dans ladite zone d'appui (7).

Fig.1

Fig.2

Fig.3

Fig.4

Fig.5

_Fig. 6_

_Fig. 7_

_Fig. 8_